# EUROPÄISCHE PATENTANMELDUNG

(11) **EP 4 418 241 A2**
(43) Veröffentlichungstag der Anmeldung: **21.08.2024**
(21) Anmeldenummer: 24157513.3
(22) Anmeldetag: 14.02.2024
(51) Int. Cl.: G09F 3/04

(54) **FOLIENELEMENT, FOLIENELEMENT-STAPEL, KUNSTSTOFFPRODUKT UND SPRITZGIESSWERKZEUG SOWIE VERFAHREN ZUR HERSTELLUNG EINES FOLIENELEMENTS UND EINES KUNSTSTOFFPRODUKTES**

(30) Priorität: 14.02.2023 AT 500952023
(71) Anmelder: Greiner Packaging International GmbH, 4550 Kremsmünster (AT)
(72) Erfinder: LEHNER, Markus, 4563 Micheldorf (AT); ECKER, Andreas, 4563 Micheldorf (AT)
(74) Vertreter: Burger, Hannes

(57) **Zusammenfassung**

Die Erfindung betrifft ein Folienelement (1), insbesondere ein in-mold-Etikett, einen Folienelement-Stapel (9), ein Kunststoffprodukt (24) und ein Spritzgießwerkzeug (32). Die Erfindung betrifft auch ein Verfahren zur Herstellung eines Folienelements (1), sowie ein Verfahren zur Herstellung eines Kunststoffproduktes (24). Das Folienelement (1) umfasst einen Grundkörper (3) mit einer ersten Außenseite (4) und einer zweiten Außenseite (5), wobei auf der ersten Außenseite (4) eine Erhebung (6) ausgebildet ist, wobei die Erhebung (6) eine Kontaktfläche (7) aufweist, wobei die Kontaktfläche (7) zur Lagerung für ein weiteres Folienelement (8) zur Bildung eines Folienelement-Stapels (9) ausgebildet ist.

## Beschreibung

Die Erfindung betrifft ein Folienelement, insbesondere ein in-mold-Etikett, einen Folienelement-Stapel, ein Kunststoffprodukt und ein Spritzgießwerkzeug. Die Erfindung betrifft auch ein Verfahren zur Herstellung eines Folienelements, sowie ein Verfahren zur Herstellung eines Kunststoffproduktes.

Folienelemente, insbesondere in-mold-Etiketten und in-mold-Label, umfassend einen Grundkörper mit einer ersten Außenseite und einer zweiten Außenseite sind der Fachwelt grundsätzlich bekannt. Gattungsgemäße Folienelemente werden in Spritzgießwerkzeuge eingelegt und mit plastifiziertem Kunststoff hinterspritzt. Je nach Anwendungsfall und Art des Spritzgießprodukts, sowie Art des Folienelements können hier auch diverse Kleber, Haftvermittler und Verbindungshilfsmittel zum Einsatz kommen.

Die im Stand der Technik bekannten Folienelemente haben den Nachteil, dass sie im Zuge der Herstellung eines Kunststoffproduktes, insbesondere eines in-mold-Kunststoffproduktes, schwer vereinzelbar bzw. schwer einzeln aufgreifbar sind. Dies aufgrund daher, weil gattungsgemäße Folien oftmals geringe Dicken aufweisen und zudem, beispielsweise bedingt durch Adhäsionskräfte, elektrostatische Aufladung etc., aneinanderhaften können. So kann es sein, dass beim Aufgreifen einzelner Folien, mehrere Folien gleichzeitig abgehoben werden. So kann es sein, dass bei der Fertigung ein fehlerhaftes Spritzgießprodukt entsteht, weil beispielsweise zwei oder mehr Folien aufgegriffen und in das Spritzgießwerkzeug eingesetzt werden. Zur Reduktion von elektrostatischer Aufladung und Adhäsionskräften wurde versucht, die Folienelemente durch Bepudern, beispielsweise mit Maisstärke, zu behandeln. Alternativ wurde versucht, die Folienelemente mit Speziallackierungen zu versehen. Es kann beispielsweise auch sein, dass beim Abheben eines einzelnen Folienelements das darunterliegende Folienelement auf dem Stapel verschoben wird und folge dessen dieses nachfolgend nicht korrekt abgehoben bzw. in das Werkzeug eingesetzt werden. So haben sich automatisierte Handhabungs- bzw. Greifprozesse zum Handhaben und Aufgreifen einzelner Folienelemente von einem Folienelement-Stapel als problematisch und fehleranfällig erwiesen, sodass sich die Fertigung von in-mold-Kunststoffprodukten als aufwendig, bzw. als stör- und fehleranfällig erweisen kann. Das Aufgreifen einzelner Folienelemente von einem Folienelement-Stapel kann auch dadurch erschwert sein, wenn eine Dicke des Folienelements nicht homogen ist, also dieses unterschiedlich dick ist. Dies insbesondere, wenn in dem Folienelement maschinenlesbare Elemente, beispielsweise Antennen, integriert sind.

Aufgabe der vorliegenden Erfindung war es, die Nachteile des Standes der Technik zu überwinden und eine Folienelement, einen Folienelement-Stapel und ein Kunststoffprodukt, sowie ein Spritzgießwerkzeug, und ein Verfahren zur Herstellung von Folienelementen und zur Herstellung von Kunststoffprodukten zur Verfügung zu stellen, mittels denen eine hohe Prozesssicherheit und Effizienz der Fertigung und zudem eine hohe Produktqualität und Produktlebensdauer ermöglicht wird.

Diese Aufgabe wird durch ein Folienelement, insbesondere ein in-mold-Etikett oder in-mold-Label (IML), eingangs genannter Art dadurch gelöst, dass auf der ersten Außenseite eine Erhebung ausgebildet ist, wobei die Erhebung eine Kontaktfläche aufweist, wobei die Kontaktfläche zur Lagerung für ein weiteres Folienelement zur Bildung eines Folienelement-Stapels ausgebildet ist.

Die Erhebung ist eine Struktur, welche sich von der Grundfläche, respektive von der ersten Außenfläche des Grundkörpers abhebt. Bevorzugt sind die Kontaktfläche der Erhebung und die erste Außenfläche zueinander parallel oder zumindest im Wesentlichen parallel, sodass sich eine Höhe der Erhebung zwischen der ersten Außenfläche und der Kontaktfläche erstreckt. Die Kontaktfläche kann sowohl zur Lagerung für eine erste Außenseite, als auch zur Lagerung für eine zweite Außenseite eines weiteren Folienelements dienen. Es ist auch denkbar, dass die Kontaktfläche zur Lagerung für eine weitere Kontaktfläche einer weiteren Erhebung eines weiteren - gleichartigen oder anders ausgebildeten - Folienelements ausgebildet ist. Wenn das Folienelement das unterste Folienelement eines Folienelement-Stapels bildet, dann kann die Kontaktfläche der Erhebung auf der ersten Außenseite dieses Folienelements zur Lagerung für einen Stapelboden ausgebildet sein. Bei dem Stapelboden kann es sich beispielsweise um ein Bauteil einer Handhabungsvorrichtung bzw. Greifvorrichtung, beispielsweise eines Manipulators oder Roboters, handeln.

Die erfindungsgemäße Ausbildung eines Folienelements hat den Vorteil, dass mittels der zumindest einen Erhebung zwischen gestapelten Folienelementen ein Spalt ausgebildet ist, wobei die Größe des Spalts der Höhe der Erhebung entsprechen kann. Wenn Folienelemente derart gestapelt sind, dass die Kontaktfläche der Erhebung eines Folienelements mit der Kontaktfläche der Erhebung eines weiteren Folienelements kontaktiert, so entspricht die Größe des Spalts zwischen den derart gestapelten Folienelementen der Summe der Höhe der beiden kontaktierenden Erhebungen. In einen solchen Spalt kann eine Handhabungs- oder Greifvorrichtung eingreifen, beispielsweise mittels eines Zangengreifers. Es ist auch denkbar und besonders vorteilhaft, wenn eine Handhabungs- oder Greifvorrichtung das Folienelement durch Kontaktierung mit der ersten bzw. stapel-obersten Außenseite, beispielsweise mittels eines Unterdruck-Greifers, wie eines Sauggreifers, oder mittels eines elektrostatischen Greifers aufgreift. Aufgrund des Spalts ist eine Reibungs- oder Haftwirkung zwischen gestapelten Folienelementen reduziert. Insbesondere kann eine Adhäsionskraft oder eine elektrostatische Aufladung zwischen gestapelten Folienelementen geringgehalten werden. Durch Veränderung der Erhebung, insbesondere durch Variation der Höhe der Erhebung und der Größe und Form der Kontaktfläche kann eine Anpassung der Eigenschaften im Hinblick auf das jeweilige Folienelement, insbesondere dessen Material und Form, erfolgen. Die Erhebung, konkret die Summe der Erhebungen, insbesondere die Summe der jeweiligen Höhen der Erhebungen bildet eine eineindeutige Positionierung beim Stapeln.

Es wäre auch denkbar, dass die Kontaktfläche eine rutschhemmende Oberfläche aufweist. So ist es beispielsweise möglich, dass auf die Kontaktfläche ein Anti-rutsch-Material, beispielsweise ein Kleber oder ein Silikon, aufgebracht ist, sodass ein laterales Verrutschen von gestapelten Folienelementen, also ein Verrutschen von gestapelten Folienelementen relativ zueinander, verhindert oder zusätzlich vermindert werden kann. Ein solches Verrutschen in Relativrichtung kann alternativ oder zusätzlich dazu auch dadurch verhindert oder zumindest vermindert werden, wenn die Einbuchtungen von gestapelten Folienelementen ineinandergreifen.

Des Weiteren kann es zweckmäßig sein, wenn der Grundkörper des Folienelements mehrschichtig ist, und dass die erste Außenseite auf einer ersten Außenschicht ausgebildet ist und dass die zweite Außenseite auf einer zweiten Außenschicht ausgebildet ist.

Mehrschichtige Folienelemente sind vorteilhafterweise individuell gestaltbar. Je nach Art und Anwendungsfall können zusätzliche Schichten zwischen der ersten Außenschicht und der zweiten Außenschicht ausgebildet sein, welche zusätzlichen Schichten insbesondere Schutzlacke, Heißsiegellacke, Kleber, Primer und/oder Folien umfassen können. Darüber hinaus können sind auch verschiedenste Arten von funktionalen und/oder optischen Schichten vorgesehen sein. Insbesondere können die erste Außenschicht und die zweite Außenschicht transparent oder transluzent sein.

Ferner kann vorgesehen sein, dass zwischen der ersten Außenschicht und der zweiten Außenschicht ein maschinenlesbares Element, insbesondere ein RFID-Chip und/oder eine Antenne, angeordnet ist.

Bei maschinenlesbaren Elementen kann es sich auch um Magnetcodierungen, elektrisch leitfähige Schichten, elektromagnetische Wellen absorbierende und/oder reemittierende Stoffe handeln. Auch NFC-Tags, gedruckte Batterien, sowie herkömmliche Barcodes sind denkbar. Insbesondere in Kombination mit einem oder mehreren maschinenlesbaren Element zwischen der erste Außenschicht und der zweiten Außenschicht kann es vorteilhaft sein, wenn die beiden Außenschichten transparent oder transluzent sind. Maschinenlesbare Elemente, insbesondere RFID-Chips und/oder Antennen, können vorteilhafterweise auf einer Trägerschicht, insbesondere auf eine Kunststoff-Trägerschicht, beispielsweise eine PET-Trägerschicht, ausgebracht oder auch eingebracht sein.

Darüber hinaus kann vorgesehen sein, dass die Erhebung eine Prägestruktur ist, wobei der Grundkörper geprägt ist, sodass auf der zweiten Außenseite eine der Erhebung gegenüberliegende und zu dieser formkomplementäre Einbuchtung ausgebildet ist.

Eine Tiefe der Einbuchtung entspricht dabei vorzugsweise der Höhe der Erhebung.

Die Struktur bzw. die Strukturen können direkt in den Grundkörper, also in sämtliche Schichten des Grundkörpers, eingeprägt werden. Beispielsweise durch vollständiges oder partielles Erwärmen des Grundkörpers und Einprägen der Strukturen mittels eines Prägewerkzeuges, wie beispielsweise einer Prägewalze.

Vorteilhaft ist auch eine Ausprägung, gemäß welcher vorgesehen sein kann, dass die Erhebung eine Prägestruktur ist, wobei die erste Außenschicht geprägt ist.

Weitere alternative Möglichkeiten bestehen somit darin, die Strukturen nur in die erste Au-βenschicht oder ggf. auch in mehrere, aber nicht alle Schichten oder in eine Zusatzschicht einzubringen bzw. einzuprägen. Dies beispielsweise im Zuge der Folienfertigung bevor sämtliche Schichten zu dem Foliengrundkörper zusammengefügt werden. Dies kann wiederum mittels einer Abformvorrichtung oder eines Abformelements in einem Prägeverfahren erfolgen.

Alternativ wäre es auch denkbar und vorteilhaft, wenn die Erhebung eine Zusatzschicht ist, wobei die Zusatzschicht auf die erste Außenseite aufgebracht ist oder wobei die Zusatzschicht zwischen der ersten Außenschicht und der zweiten Außenschicht angeordnet ist. Eine solche Zusatzschicht kann ebenso eine geprägte Schicht sein, es ist aber auch denkbar, wenn die Zusatzschicht eine partielle Schicht ist, welche bereichsweise auf die erste Außenseite aufgebracht, beispielsweise aufgeklebt, ist, oder welche bereichsweise zwischen der ersten und der zweiten Außenschicht positioniert ist.

Wenn die erste Außenschicht selbst geprägt ist, oder wenn eine Zusatzschicht auf der ersten Außenseite aufgebracht ist, dann kann es vorteilhaft sein, wenn die zweite Außenseite glatt ist, also weder Erhebungen noch Vertiefungen oder Einbuchtungen aufweist.

Gemäß einer Weiterbildung ist es möglich, dass die erste Außenschicht und die zweite Au-βenschicht jeweils Kunststofffolien sind, wobei die erste Außenschicht und die zweite Außenschicht bevorzugt aus demselben Material gebildet sind.

Bevorzugt ist das Folienelement und sämtliche seiner Schichten transparent oder zumindest transluzent. Dies insbesondere, wenn das Folienelement ein maschinenlesbares Element umfasst. Wenn das maschinenlesbare Element ein RFID-Chip oder eine Antenne ist, so ist dieses üblicherweise opak.

Die erste Außenschicht und die zweite Außenschicht können bevorzugt zumindest eines der Materialien aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK), Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitrilbutadienstyrol (ABS), Polyvinylchlorid (PVC), Ethylentetrafluorethylen (ETFE), Polytetrafluorethylen (PTFE), Polyvinylfluorid (PVF), Polyvinylidenfluorid (PVDF), Ethylen-Tetrafluorethylen-Hexafluorpropylen-Fluorterpolymer (EFEP), Cellulose- oder Ligninbasierte Kunststoffe, Polyhydroxyalkanoate (PHA), thermoplastische Stärke (TPS), Polymilchsäure (PLA), Polycaprolacton (PCL), Polybutylensuccinat (PBS), und Polybutylenadipat-terephthalat (PBAT) und/oder zumindest einen recycelten und/oder biologisch und/oder marin abbaubare Kunststoff und/oder Mischungen und/oder Co-Polymere dieser Materialien umfassen oder aus zumindest einem dieser Materialien hergestellt sein.

Es ist auch denkbar, dass weitere Schichten des Folienelements aus einem Kunststoffmaterial gebildet sind oder ein solches umfassen. Insbesondere kann eine Trägerschicht, auf welche ein maschinenlesbares Merkmal aufgebracht ist, aus einem Kunststoffmaterial ausgewählt aus obenstehender Liste gebildet sein. Alternativ oder zusätzlich können weitere Schichten auch Cellulosefaser-haltig sein. Beispielsweise sind Papierschichten oder papierhaltige Schichten denkbar. Es kann auch sein, dass die erste und/oder die zweite Außenschicht Anteile oder Bereiche eines Cellulosefaser-haltigen Materials aufweist.

Ferner kann es zweckmäßig sein, wenn die Kontaktfläche der Erhebung kleiner ist, als eine Gesamtfläche der ersten Außenseite, insbesondere dass die Kontaktfläche der Erhebung von 0,1% bis 49%, bevorzugt von 0,2% bis 25%, besonders bevorzugt von 0,5% bis 10% der Gesamtfläche der ersten Außenseite beträgt.

Darüber hinaus kann vorgesehen sein, dass auf der ersten Außenseite mehrere Erhebungen ausgebildet sind, wobei die Erhebungen jeweils dieselbe Höhe aufweisen.

Mit dem Begriff Höhe ist hierbei die direkteste Distanz zwischen dem obersten bzw. äußersten Punkt der Kontaktfläche und der ersten Außenseite gemeint. Die Erhebungen können dabei durchwegs gleichartig geformt sein, aber auch unterschiedlich geformt sein. Wenn mehrere Erhebungen ausgebildet sind, dann beziehen sich die zuvor angegebenen bevorzugten Wertebereiche auf die Summe aller Kontaktflächen aller auf der ersten Außenseite ausgebildeten Erhebungen.

Des Weiteren kann vorgesehen sein, dass die Erhebungen jeweils im Nahbereich von Rändern des Grundkörpers angeordnet sind, insbesondere dass die Erhebungen näher an den Rändern des Grundkörpers angeordnet sind als an einer Mitte des Grundkörpers.

Das hat den Vorteil, dass bei an den Rändern oder im Nahbereich der Ränder ausgebildeten Erhebungen eine besonders gute Auflagerwirkung erzielt werden kann, sodass ein Abheben bzw. Entfernen von einzelnen Folienelementen von einem Folienelement-Stapel besonders gut erfolgen kann.

Das Folienelement bzw. sein Grundkörper kann dabei verschiedene Grundformen aufweisen. Um nur einige Beispiele nicht abschließend zu nennen sind runde, ovale und rechteckige Grundformen gleichermaßen denkbar. Ebenso denkbar sind verschiedenen Grundformen bzw. Konturen der Erhebung bzw. der Erhebungen. Diese können, bei Betrachtung in orthogonaler Richtung auf die erste Außenseite beispielsweise eine ringförmige, runde, ovale oder längliche Grundform aufweisen.

Gemäß einer besonderen Ausprägung ist es möglich, dass auf der zweiten Außenseite eine weitere Erhebung ausgebildet ist, wobei die weitere Erhebung eine Kontaktfläche aufweist, wobei die Kontaktfläche zur Lagerung für ein weiteres Folienelement zur Bildung eines Folienelement-Stapels ausgebildet ist.

Wie zuvor schon im Hinblick auf die Erhebung auf der ersten Außenseite und deren Kontaktfläche beschrieben, kann die weitere Erhebung auf der zweiten Außenseite ähnlich oder sogar gleich ausgebildet sein. Insbesondere kann die Kontaktfläche der weiteren Erhebung parallel zur zweiten Außenseite sein. Die Kontaktfläche der weiteren Erhebung auf der zweiten Außenseite kann zur Lagerung für eine erste und/oder für eine zweite Außenseite eines weiteren Folienelements dienen. Eine Höhe der weiteren Erhebung auf der zweiten Außenseite kann gleich groß sein, wie die Erhöhung auf der ersten Außenseite. Die beiden Höhen können aber auch verschieden groß sein.

Entsprechend einer vorteilhaften Weiterbildung kann vorgesehen sein, dass die Höhe der Erhebung geringer ist als eine Dicke des Grundkörpers, insbesondere dass die Höhe der Erhebung zwischen 10% und 250%, bevorzugt zwischen 20% und 150%, besonders bevorzugt zwischen 30% und 90%, insbesondere zwischen 40% und 70% der Dicke des Grundkörpers beträgt.

Mit dem Begriff Dicke des Grundkörpers ist der direkte Abstand bzw. die direkte Distanz zwischen der ersten Außenseite und der zweiten Außenseite des Folienelement-Grundkörpers gemeint. Der Begriff Höhe der Erhebung wurde bereits obenstehend erläutert und bezieht sich auf den direkten Abstand zwischen erster Außenseite und Kontaktfläche der Erhebung.

Insbesondere kann es vorteilhaft sein, wenn der Grundkörper einen Durchbruch aufweist, wobei der Durchbruch bevorzugt in einer Mitte des Grundkörper angeordnet ist. Je nach Anwendungsfall ist aber auch jede andere, insbesondere auch außermittige, Positionierung des Durchbruches denkbar und gegebenenfalls zweckmäßig.

Vorteilhafterweise handelt es sich bei dem Durchbruch um ein Loch im Grundkörper, insbesondere um ein gestanztes Loch, welches sich von der ersten Außenfläche zur zweiten Außenfläche hin erstreckt. Das Loch kann dabei bevorzugt kreisrund sein. Auch andere Formen, beispielsweise ein ovaler oder länglicher Durchbruch sind denkbar. Auch mehr als ein Durchbruch ist denkbar, wobei mehrere Durchbrüche gleichartig aber auch verschieden groß oder verschieden geformt sein können.

Ein im Grundkörper angeordneter Durchbruch kann im Zuge der Fertigung eines in-mold-Kunststoffproduktes zur Fixierung und Zentrierung des Folienelements dienen, sodass diese positionsgenau auf einem Grundkörper des Kunststoffproduktes angeordnet werden kann. Weiters kann durch den Durchbruch hindurch im Zuge eines in-mold-Fertigungsprozesses plastifizierter Kunststoff gespritzt werden, und so eine Werkzeugkavität, respektive ein Formnest, gefüllt werden.

Die Aufgabe der Erfindung wird unabhängig davon auch durch einen Folienelement-Stapel umfassend zwei oder mehr Folienelemente gelöst, wobei zumindest eines der Folienelemente nach einem der Ansprüche ausgebildet ist, und wobei die Kontaktfläche der Erhebung auf der ersten Außenseite des Folienelements zur Lagerung für ein weiteres Folienelement ausgebildet ist.

Um unnötige Wiederholungen zu vermeiden sei an dieser Stelle auf die obenstehenden Beschreibungsteile verwiesen. Folienelement-Stapel können dabei, wie bereits eingangs beschrieben, aus identen oder auch verschiedenartigen Folienelementen umfassend die obenstehend beschriebene Einbuchtung bzw. Einbuchtungen gebildet sein. Es ist aber auch denkbar, dass die Folienelemente verschiedenartig sind. So kann ein Stapel beispielsweise alternierend aus einem Folienelement mit der oder den obenstehend beschriebenen Einbuchtungen und einem quasi glatten, also ohne Einbuchtungen ausgebildeten Folienelement gebildet sein.

Die Aufgabe der Erfindung wird unabhängig davon auch durch ein Kunststoffprodukt, insbesondere in-mold-Kunststoffprodukt, hergestellt durch Spritzgießen, mit einem Grundkörper, umfassend ein auf den Grundkörper aufgebrachtes Folienelement nach einem der Ansprüche gelöst. Insbesondere ist das Folienelement auf der Oberfläche des Grundkörpers des Kunststoffproduktes angeordnet.

Um unnötige Wiederholungen zu vermeiden sei auch an dieser Stelle auf die obenstehenden Beschreibungsteile verwiesen. Vorzugsweise handelt es sich bei dem Kunststoffprodukt um ein Verpackungsprodukt und dabei insbesondere um ein Mehrweg-Verpackungsprodukt. Vorteilhafterweise ist das Folienelement, oder zumindest dessen erste Außenschicht und/oder dessen zweite Außenschicht aus demselben Material gebildet, wie der Grundkörper des Kunststoffproduktes. Besonders bevorzugt ist hierbei Polypropylen. Ebenso bevorzugt sind Polyolefine. Zweckmäßigerweise wird dasselbe oder zumindest ein ähnliches Material bzw. Polymer verwendet, wie für das Spritzgießprodukt selbst. Insbesondere wenn es sich bei dem Kunststoffprodukt um ein in-mold-Kunststoffprodukt handelt, so sei an dieser Stelle präzisierend erläutert, dass mit dem Begriff "aufgebracht" auch umfasst bzw. gemeint ist, dass ein als in-mold-Etikett ausgebildetes Folienelement im Sinne eines in-mold-Fertigungsprozess auch als "eingebracht" getrachtet werden kann.

Vorteilhaft ist auch eine Ausprägung, gemäß welcher vorgesehen sein kann, dass das Folienelement gemäß obenstehender Beschreibung mit einem Durchbruch ausgebildet ist, und dass in dem Grundkörper des Kunststoffproduktes eine Positionierungskerbe ausgebildet ist, wobei innerhalb der Positionierungskerbe ein Einspritzpunkt angeordnet ist, wobei eine Tiefe des Einspritzpunktes in Bezug auf die Oberfläche des Grundkörpers des Kunststoffproduktes größer oder gleich groß ist, wie eine Tiefe der Positionierungskerbe in Bezug auf die Oberfläche des Grundkörpers , und wobei das Folienelement derart auf den Grundkörper aufgebracht ist, dass der Durchbruch im Grundkörper des Folienelements über der Positionierungskerbe im Grundkörper des Kunststoffproduktes positioniert ist, wobei der Durchbruch des Folienelements größer ist, als die Positionierungskerbe im Grundkörper des Kunststoffproduktes und wobei die Positionierungskerbe im Grundkörper des Kunststoffproduktes größer ist, als der Einspritzpunkt.

Gemäß einer Weiterbildung ist es möglich, dass der Durchbruch des Folienelements, die Positionierungskerbe im Grundkörper des Kunststoffproduktes und der Einspritzpunkt konzentrisch in Bezug auf einen Mittelpunkt des Einspritzpunktes sind.

Die Aufgabe der Erfindung wird auch durch ein Spritzgießwerkzeug zur Herstellung eines Kunststoffproduktes, mit einem ersten Werkzeugteil und einem zweiten Werkzeugteil, wobei der erste Werkzeugteil und der zweite Werkzeugteil zur Bildung einer Negativform eines Kunststoffproduktes entlang einer Zentrierungsachse zusammenführbar sind, gelöst. Alternative Begriff zu Negativform sind beispielsweise Werkzeugkavität oder Formnest. Dabei ist vorgesehen, dass der erste Werkzeugteil einen Zentrierungsfortsatz aufweist, wobei der Zentrierungsfortsatz dazu ausgebildet ist, ein auf den Zentrierungsfortsatz aufgesetztes Folienelement mit einem Durchbruch in seinem Grundkörper, insbesondere ein Folienelement nach vorhergehender Beschreibung umfassend einen Durchbruch, zu zentrieren und zu fixieren. Der Zentrierungsfortsatz ragt im zusammengesetzten Zustand der beiden Werkzeugteile in die Negativform hinein, sodass der Zentrierungsfortsatz in einem durch Einspritzen von plastifiziertem Kunststoff in das Spritzgießwerkzeug gebildetem Kunststoffprodukt eine Positionierungskerbe ausbildet bzw. formt. Der Bereich des Zentrierungsfortsatzes, welcher am tiefsten bzw. am weitesten in die Negativform hineinragt, kann dabei entweder tiefer in die Form hineinragen als ein Einspritzpunkt einer Düse, oder gleich tief in die Negativform hineinragen wie ein Einspritzpunkt einer Düse. Im zusammengeführten Zustand des ersten Werkzeugteils und des zweiten Werkzeugteils sind der zweite Werkzeugteil und der Zentrierungsfortsatz entlang einer gemeinsamen Zentrierungsachse angeordnet und wirken derart zusammen, dass ein Folienelement dazwischen fixierbar ist, sodass das Folienelement beim Einspritzen von plastifiziertem Kunststoff in das Spritzgießwerkzeug in Bezug auf die Zentrierungsachse in axialer Richtung zum ersten Werkzeugteil gedrückt ist und in radialer Richtung fixiert ist.

Dem Zentrierungsfortsatz kommt somit neben einer Zentrierungsfunktion auch eine Funktion als Richtungsgeber zu. Damit kann erreicht werden, dass keine Schmelze bzw. kein plastifizierter Kunststoff im Werkzeug hinter das Folienelement gelangen kann, weil dieses zuverlässig gegen den ersten Werkzeugteil gedrückt ist.

Bevorzugt ist die Zentrierungsachse ident oder zumindest parallel zur Werkzeugachse, entlang welcher die beiden Werkzeugteile zusammenführbar sind, und/oder ident oder zumindest parallel zur Einspritzachse einer Düseneinheit einer Plastifiziereinheit.

Gemäß einer vorteilhaften Weiterbildung kann es sein, dass der zweite Werkzeugteil ein Gegenelement aufweist, und wobei im zusammengeführten Zustand des ersten Werkzeugteils und des zweiten Werkzeugteils das Gegenelement und der Zentrierungsfortsatz entlang einer gemeinsamen Zentrierungsachse angeordnet sind und derart zusammenwirken, dass ein Folienelement dazwischen fixierbar ist, sodass das Folienelement beim Einspritzen von plastifiziertem Kunststoff in das Spritzgießwerkzeug in Bezug auf die Zentrierungsachse in axialer Richtung zum ersten Werkzeugteil gedrückt ist und in radialer Richtung fixiert ist.

Das Gegenelement dient der Materialflusslenkung indem ist während des Einspritzens von plastifiziertem Kunststoff in die Negativform bewirkt, dass der Anspritzpunkt umhüllt wird und so dabei hilft, ein unerwünschtes Hinterspritzen des Folienelements zu verhindern oder zumindest zu vermindern. Dadurch wird eine Prozesssicherheit weiter erhöht.

Die Aufgabe der Erfindung wird auch durch ein Verfahren zur Herstellung eines Folienelements, insbesondere eines Folienelements nach einem der Ansprüche gelöst. Das Verfahren umfasst die Verfahrensschritte:
- Bereitstellen einer Folie,
- Prägen der Folie mittels eines Prägewerkzeuges,
- Konfektionieren der Folie in mehrere einzelne Folienelemente.

Des Weiteren kann vorgesehen sein, dass die Folie oder das Folienelement mittels eines Stanzwerkzeuges gestanzt wird, oder mittels eines Lasers hergestellt wird, sodass der Grundkörper jedes Folienelements einen Durchbruch aufweist.

Die bereitgestellte Folie kann dabei, wie in den obenstehenden Beschreibungsteilen im Zusammenhang mit dem Folienelement erläutert, auch eine mehrschichtige Folie sein. Dies insbesondere mit funktionalen Schichten, wie bevorzugt detektierbaren Elementen. Der Konfektionierungsschritt kann zudem einen Stapelungsschritt umfassen oder ein solcher Schritt kann der Konfektionierung nachfolgen. Dabei können die einzelnen Folienelement zu einem Folienelement-Stapel gestapelt werden. Es kann auch wie obenstehend bereits erläutert sein, dass verschiedenartig ausgebildete Folienelemente oder gleichartige Folienelemente gestapelt werden.

Die angegebene Reihenfolge der Verfahrensschritte ist grundsätzlich die bevorzugte. Es ist aber auch denkbar, dass zunächst eine Konfektionierung von einzelnen Folienelementen erfolgt, und diese erst danach, also als einzelne Folienelemente geprägt werden. Ein Stapelungsschritt würde hierbei ebenso nach dem Prägen erfolgen.

Es kann auch sein, dass ein Prägen der Folie im selben Arbeitsschritt erfolgt, wie ein Herstellen, insbesondere wie ein Stanzen oder Laserschneiden, eines Durchbruchs.

Die Aufgabe der Erfindung wird auch durch ein Verfahren zur Herstellung eines Kunststoffproduktes, bevorzugt eines Kunststoffproduktes nach einem der Ansprüche gelöst. Das Verfahren umfasst die Verfahrensschritte:
- Bereitstellen einer Spritzgießanlage, die Spritzgießanlage umfassend eine Plasti-fiziereinheit zum Plastifizieren von Kunststoff und eine Schließeinheit mit einem Spritzgießwerkzeug,
- Bereitstellen eines Folienelement-Stapels, insbesondere eines Folienelement-Stapels nach Anspruch 13, wobei die Folienelemente des Folienelement-Stapels bevorzugt nach einem der Ansprüche ausgebildet sind und/oder bevorzugt in einem Verfahren nach einem der Ansprüche hergestellt sind,
- Aufgreifen eines Folienelements von dem Folienelement-Stapel durch Abhebendes obersten Folienelements oder des untersten Folienelements mittels einer Handhabungsvorrichtung,
- Einsetzen des Folienelements in das Spritzgießwerkzeug,
- Einbringen von plastifiziertem Kunststoff von der Plastifiziereinheit in das Spritz-gießwerkzeug und dadurch Hinterspritzen des Folienelements und Formen eines Kunststoffproduktes.

Das Aufgreifen eines Folienelements kann mit einer Handhabungsvorrichtung erfolgen, welche einen Manipulator bzw. Roboter umfasst. Denkbar sind hierbei Sauggreifer mittels Unterdruck, elektrostatische Greifer, Zangengreifer, und dergleichen.

Beim Einsetzen des Folienelements in das Spritzgießwerkzeug kann das Folienelement so positioniert sein, dass die Erhebung am Folienelement mit dem Werkzeugteil kontaktiert, oder von diesem abgewandt ist, also die Erhebung in die Werkzeugkavität bzw. in das Formnest hineinragt. Bevorzugt ist die letztere dieser beiden Varianten, da hierbei eine besonders gute Prozesssicherheit gewährleistet ist und eine besonders gute Fixierung, insbesondere in Kombination mit einer Unterdruckfixierung wie im nachfolgenden Absatz beschrieben, ermöglicht ist.

Zum Halten bzw. Fixieren des Folienelements in dem Spritzgießwerkzeug kann in einer Werkzeughälfte, insbesondere in der ersten Werkzeughälfte, in die das Folienelement eingesetzt wird, ein oder mehrere Unterdruck-Kanäle vorgesehen sein.

Entsprechend einer vorteilhaften Weiterbildung kann vorgesehen sein, dass das Spritzgießwerkzeug gemäß obenstehender Beschreibung mit einem ersten und einem zweiten Werkzeugteil ausgebildet ist, und dass im Grundkörper des Folienelements ein Durchbruch ausgebildet ist, wobei das Folienelement mit dem Durchbruch auf den Zentrierungsfortsatz des ersten Werkzeugteils eingesetzt wird, und wobei der erste Werkzeugteil und der zweite Werkzeugteil geschlossen werden, sodass das Folienelement zwischen dem Zentrierungsfortsatz und dem Gegenelement des zweiten Werkzeugteils fixiert wird, wobei das Folienelement beim Einbringen von plastifiziertem Kunststoff in das Spritzgießwerkzeug in Bezug auf die Zentrierungsachse in axialer Richtung zum ersten Werkzeugteil gedrückt wird und in radialer Richtung fixiert wird.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel eines Folienelements in dreidimensionaler Darstellung mit Blick auf die zweite Außenseite;
- Fig. 2: das Folienelement aus Fig. 1 in dreidimensionaler Darstellung mit Blick auf die erste Außenseite;
- Fig. 3: einen Folienelement-Stapel in Seitenansicht;
- Fig. 4: ein Kunststoffprodukt mit einem Folienelement in dreidimensionaler Darstellung;
- Fig. 5: das Folienelement aus Fig. 1 in geschnittener Seitenansicht;
- Fig. 6: eine Detailansicht der Fig. 5;
- Fig. 7: ein weiteres Ausführungsbeispiel eines Folienelements, sowie einen Folienelement-Stapel in geschnittener Seitenansicht;
- Fig. 8: einen weiteren Folienelement-Stapel in Seitenansicht;
- Fig. 9: ein weiteres Ausführungsbeispiel eines Folienelements in Draufsicht mit Blick auf die erste Außenseite;
- Fig. 10: das Folienelement aus Fig. 9 in geschnittener Seitenansicht;
- Fig. 11: ein weiteres Ausführungsbeispiel eines Folienelements in Draufsicht mit Blick auf die erste Außenseite;
- Fig. 12: das Folienelement aus Fig. 11 in geschnittener Seitenansicht;
- Fig. 13: ein Ausführungsbeispiel eines Spritzgießwerkzeugs mit einem ersten Werkzeugteil und einem zweiten Werkzeugteil, in dreidimensionaler Darstellung;
- Fig. 14: ein Spritzgießwerkzeug in geschnittener Seitenansicht vor dem Zusammenführen;
- Fig. 15: das Spritzgießwerkzeug aus Fig. 14 in geschnittener Seitenansicht in zusammengeführtem Zustand;
- Fig. 16: ein Kunststoffprodukt mit einem Folienelement in geschnittener Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

An dieser Stelle sei darauf hingewiesen, dass die Formulierung "eine Schicht ist auf etwas aufgebracht" so zu verstehen ist, dass die Schicht direkt aufgebracht sein kann, oder dass sich zwischen der aufgebrachten Schicht und dem, worauf die Schicht aufgebracht ist, noch eine oder mehrere Zwischenschichten befinden können. An dieser Stelle sei auch darauf hingewiesen, dass zwischen den in diesem Dokument beschriebenen Schichten eine oder auch mehrere Zwischenschichten angeordnet sein können. Es ist somit nicht zwingend erforderlich, dass die beschriebenen Schichten einander kontaktieren. Weiters sei darauf hingewiesen, dass der Begriff Schicht in diesem Dokument so zu verstehen ist, dass eine Schicht auch aus mehreren Teilschichten aufgebaut sein kann.

Um unnötige Wiederholungen zu vermeiden, werden die Figuren nachfolgend so weit als sinnvoll und möglich in einer Zusammenschau beschrieben, wobei für gleiche Teile gleiche Bezugszeichen bzw. Bauteilbezeichnungen verwendet werden.

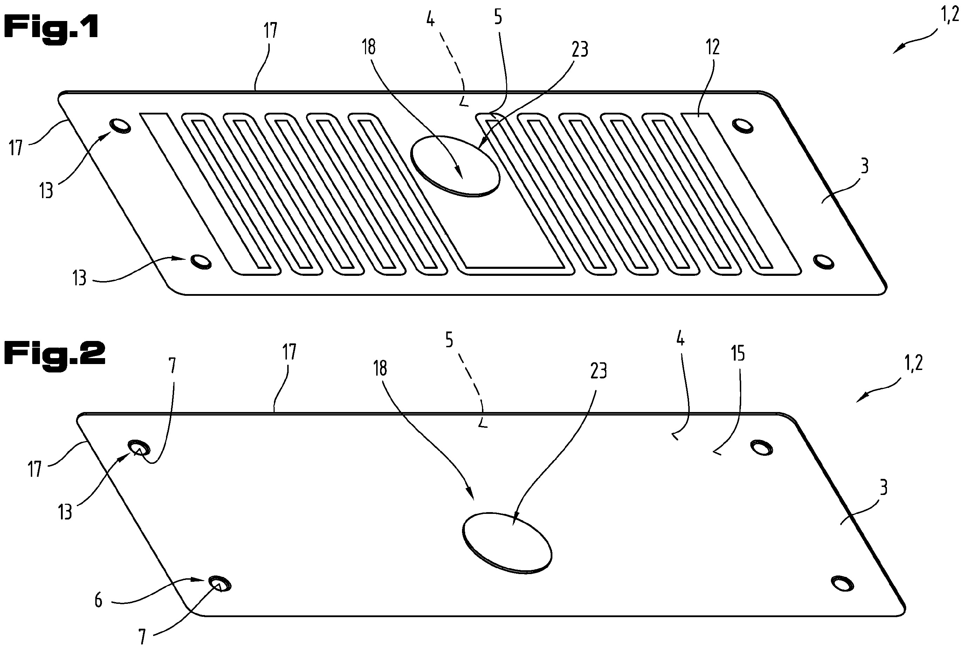

In den Fig. 1 bis 3, sowie Fig. 5 bis 12 sind verschiedene Ausführungsbeispiele von Folienelementen 1 bzw. von in-mold-Etiketten 2, und daraus gebildeten Folienelement-Stapeln 9 in verschiedenen Ansichten gezeigt. Die gezeigten Beispiele sind dabei teilweise grob schematisch dargestellt.

Die nachfolgend beschriebenen Folienelemente 1 bzw. Folienelement-Stapel 9 können in einem Verfahren zur Herstellung eines Folienelements 1 hergestellt sein, welches die folgenden Verfahrensschritte umfasst:
- Bereitstellen einer Folie,
- Prägen der Folie mittels eines Prägewerkzeuges,
- Konfektionieren der Folie in mehrere einzelne Folienelemente 1.

Die Folie oder das Folienelement 1 können mittels eines Stanzwerkzeuges gestanzt werden, oder mittels eines Lasers hergestellt wird, sodass der Grundkörper 3 jedes Folienelements 1 einen Durchbruch 23 aufweist.

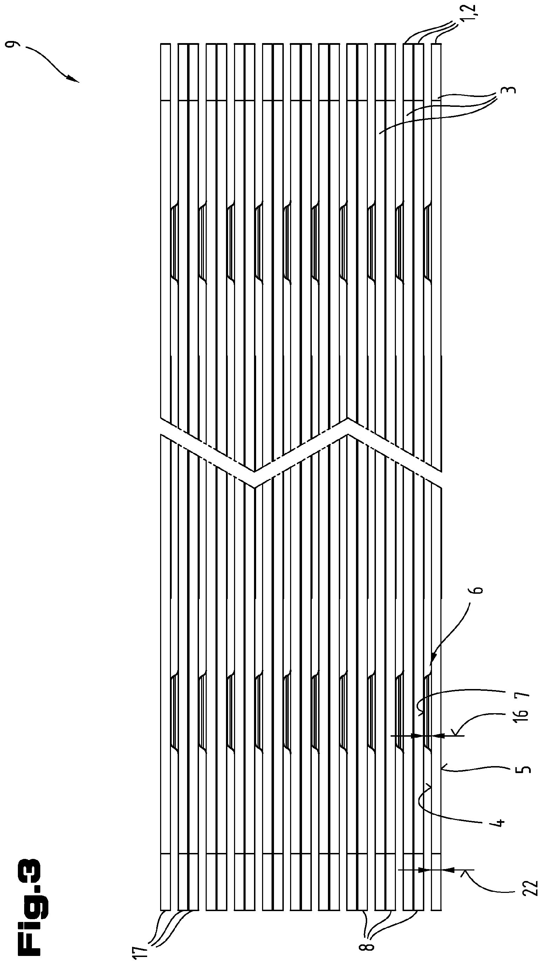

In den Fig. 3, 7 und 8 sind jeweils Beispiele von Folienelement-Stapel 9 umfassend zwei oder mehr Folienelemente 1, 8 gezeigt. Dabei ist jeweils zumindest eines der Folienelemente 1 erfindungsgemäß ausgebildet ist, wobei die Kontaktfläche 7 der Erhebung 6 auf der ersten Außenseite 4 des Folienelements 1 zur Lagerung für ein weiteres Folienelement 8 ausgebildet ist.

Sämtliche in den Figuren gezeigte Folienelemente 1 haben gemeinsam, dass sie jeweils einen Grundkörper 3 mit einer ersten Außenseite 4 und einer zweiten Außenseite 5 umfassend und dass auf der ersten Außenseite 4 jeweils zumindest eine Erhebung 6 ausgebildet ist. Die Erhebung 6 weist eine Kontaktfläche 7 auf, wobei die Kontaktfläche 7 zur Lagerung für ein weiteres Folienelement 8 zur Bildung eines Folienelement-Stapels 9 ausgebildet ist.

In den Fig. 1 und 2 ist ein Ausführungsbeispiel eines Folienelements 1 gezeigt, wobei dieses in der Fig. 1 so ausgerichtet ist, dass dessen zweite Außenseite 5 gezeigt ist und wobei dieses in der Fig. 2 so ausgerichtet ist, dass dessen erste Außenseite 4 gezeigt ist. Auf der zweiten Außenseite 5 ist dabei ein maschinenlesbares Element 12, insbesondere ein RFID-Chip, dargestellt. Dazu kann eine zweite Außenschicht 11, welche die zweite Außenseite 5 bilden kann, transparent sein. Das in der Fig.l und 2 gezeigte Folienelement 1 kann, wie auch alle anderen Folienelemente 1 gemäß den Beispielen, sowohl so auf einem Kunststoffprodukt 24 angeordnet sein, dass darin die erste Außenseite 4 oder die zweite Außenseite 5 nach außen zeigen kann, also für einen Betrachter sichtbar sein kann. Das bedeutet, dass es sein kann, dass die Erhebungen 6 der Oberfläche 29 des Kunststoffproduktes 24 zugewandt, aber auch abgewandt sein können. Dies insbesondere, da die Erhebungen 6 bevorzugt eine vergleichsweise geringe Höhe 16 aufweisen, und sich von der Oberfläche 29 des Kunststoffproduktes 24 daher nicht oder nur geringfügig und nicht störend abheben.

Es kann auch sein, dass der Grundkörper 3 einen Durchbruch 23 aufweist, wobei der Durchbruch 23 bevorzugt in einer Mitte 18 des Grundkörper 3 angeordnet ist. Es kann auch sein, dass der Durchbruch 23 außermittig angeordnet ist. Im Beispiel gemäß Fig. 1 und 2 mit einem rechteckigen Grundkörper ist der Durchbruch 23 in Bezug auf zwei die zwei kurzen Seitenränder mittig und in Bezug auf die zwei langen Seitenränder außermittig, also näher an einer der beiden langen Seitenränder positioniert. Es versteht sich von selbst, dass dies lediglich eine beispielhafte denkbare Anordnung stellt und eine Vielzahl weiterer Anordnungen des Durchbruches 23 denkbar sind.

Das in den Fig. 1 und 2 gezeigte Beispiel eines Folienelements 1 weist einen solchen Durchbruch 23, insbesondere ein kreisrundes Loch, auf, welcher im Wesentlichen in der Mitte 18 des Grundkörpers 3 angeordnet ist.

Es kann auch sein, dass die Erhebungen 6 jeweils im Nahbereich von Rändern 17 des Grundkörpers 3 angeordnet sind, insbesondere dass die Erhebungen 6 näher an den Rändern 17 des Grundkörpers 3 angeordnet sind, als an einer Mitte 18 des Grundkörpers 3. Die vier Erhebungen 6 sind in den Fig. 1 und 2 jeweils gleich groß und an den vier Ecken Grundkörpers 3, insbesondere in der Nähe der Ränder 17, angeordnet.

Die Fig. 3 zeigt einen Folienelement-Stapel 9, wobei beispielhaft alternierend jeweils ein Folienelement 1 gemäß der Fig. 1 bzw. 2 und ein weiteres Folienelement 8 gestapelt sind. Das weitere Folienelement 8 weist dabei keinerlei Erhebungen 6 auf, sein Grundkörper ist also völlig glatt und an seinen Flachseiten lediglich durch seine beiden Außenseiten begrenzt. Dort, wo eine Kontaktfläche 7 der Erhebung 6 mit dem weiteren Folienelement 8 in Berührung ist, dient dieses quasi als Distanzmittel und distanziert die beiden Folienelemente 1, 8 voneinander, wobei eine Distanz zwischen den Folienelementen 1, 8 hierbei einer Höhe 16 der Erhebung 6 entspricht. Wechselweise liegen das weitere Folienelement 8 und das Folienelement 1 hierbei ohne diese Distanz aufeinander.

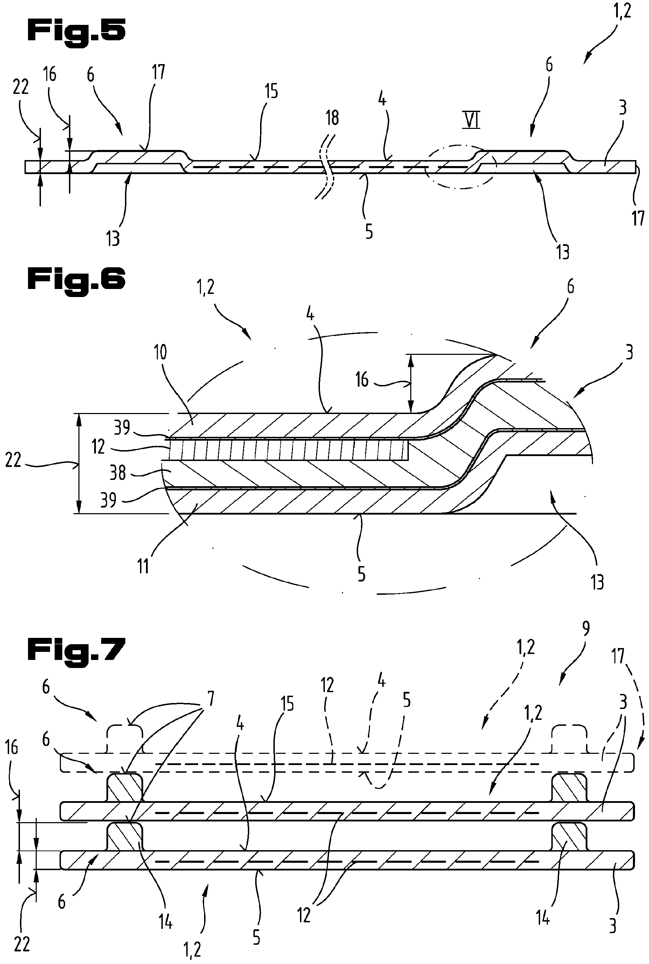

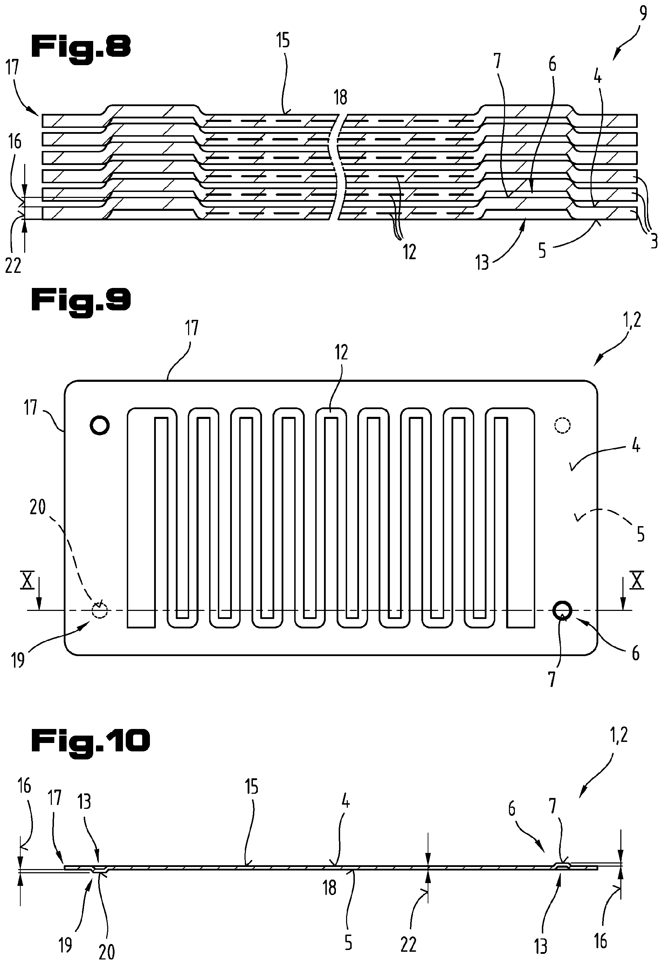

Alternative Beispiele für Folienelement-Stapel 9 sind in den Fig. 7 und 8 gezeigt. So kann es gemäß Fig. 7 sein, dass die Erhebung 6 eine Zusatzschicht 14 ist, wobei die Zusatzschicht 14 auf die erste Außenseite 4 aufgebracht sein kann oder zwischen der ersten Außenschicht 10 und der zweiten Außenschicht 11 angeordnet sein kann. Auch denkbar, jedoch nicht figürlich gezeigt ist eine Variante, wonach die Erhebung 6 eine Prägestruktur ist, wobei die erste Au-βenschicht 10 geprägt ist. Die nicht gezeigte Variante, wonach die Erhebung 6 eine Prägestruktur ist, wobei die erste Außenschicht 10 geprägt ist, würde grundsätzlich ähnlich aussehen wie in der Fig. 7 gezeigt.

Es kann sein, dass die Erhebung 6 eine Prägestruktur ist, wobei der Grundkörper 3 geprägt ist, sodass auf der zweiten Außenseite 5 eine der Erhebung 6 gegenüberliegende und zu dieser formkomplementäre Einbuchtung 13 ausgebildet ist. Dies ist insbesondere in den Fig. 2, 3, 5, 6, 8, 9, 10 und 12 gezeigt.

Der Folienelement-Stapel 9 gemäß Fig. 8 wäre ein Beispiel von gleichartig gestapelten Folienelementen 1, beispielsweise von Folienelementen 1 gemäß den Fig. 1 bis 2. Hierbei würden die Erhebungen 6 bzw. die zu diesen formkomplementären Einbuchtungen 13 im Stapel ineinandergreifen, sodass eine Distanz zwischen den gestapelten Folienelementen 1 geringer ist als die Höhe 16 einer Erhebung 6. Weil die Erhebungen 6 in dem gezeigten Beispiel eine zylindrische bzw. kegelförmige, also nach oben hin verjüngende Form haben, liegen die derart gestapelten Folienelemente 1 nicht völlig anliegend aufeinander, sodass ein Spalt zwischen den Folienelementen 1 verbleibt. So kann gleichzeitig eine Reibung zwischen den Folienelementen 1 verringert sein und zudem ein Verschieben in von Folienelementen 1 relativ zueinander verhindert werden.

Es kann sein, dass auf der ersten Außenseite 4 mehrere Erhebungen 6 ausgebildet sind, wobei die Erhebungen 6 jeweils dieselbe Höhe 16 aufweisen.

Es kann auch sein, dass die Höhe 16 der Erhebung 6 geringer ist als eine Dicke 22 des Grundkörpers 3, insbesondere dass die Höhe der Erhebung 6 zwischen 10% und 250%, bevorzugt zwischen 20% und 150%, besonders bevorzugt zwischen 30% und 90%, insbesondere zwischen 40% und 70% der Dicke 22 des Grundkörpers 3 beträgt.

Die Fig. 5 und 6 zeigen jeweils einen Schnitt durch den Grundkörper 3 eines Folienelements 1. Beispielsweise kann es sich hier um das Folienelement 1 aus den Fig. 1 bis 4 handeln.

Die Fig. 6 ist eine Detailansicht der Fig. 5, und zeigt eine Variante, wonach der Grundkörper 3 mehrschichtig ist, und die erste Außenseite 4 auf einer ersten Außenschicht 10 ausgebildet ist und die zweite Außenseite 5 auf einer zweiten Außenschicht 11 ausgebildet ist. Das Beispiel zeigt auch, dass zwischen der ersten Außenschicht 10 und der zweiten Außenschicht 11 ein maschinenlesbares Element 12, insbesondere ein RFID-Chip und/oder eine Antenne, angeordnet sein kann. Der mehrschichte aufgebaute Grundkörper 3 umfasst in dem gezeigten Detail gemäß der Fig. 6, dass ein maschinenlesbares Element 12 auf bzw. in einer Trägerschicht 38, beispielsweise eine PET-Schicht, angeordnet sein kann. Zur Verbindung dieser Trägerschicht 38 umfassend ein maschinenlesbares Element 12 kann beidseitig eine Haftvermittlerschicht 39 vorgesehen sein, mittels derer eine Verbindung zu der ersten Außenschicht 10 und der zweiten Außenschicht 11 verbessert werden kann. Für den Fachmann versteht es sich von selbst, dass dieser beispielhafte Aufbau nicht einschränkend zu verstehen ist und stellvertretend für eine Vielzahl an denkbarer Schichtaufbauten steht. Darüber hinaus zeigen auch die Fig. 1, 3 bis 5, sowie 7 bis 15 Folienelemente 1 mit einem maschinenlesbaren Element 12.

Es kann auch sein, dass auf der zweiten Außenseite 5 eine weitere Erhebung 19 ausgebildet ist, wobei die weitere Erhebung 19 eine Kontaktfläche 20 aufweist, wobei die Kontaktfläche 20 für ein weiteres Folienelement 8 zur Bildung eines Folienelement-Stapels 9 ausgebildet ist. Die Fig. 9 und 10 zeigen ein solches Ausführungsbeispiel eines Folienelements 1, bei welchem Erhebungen an beiden Außenseiten ausgebildet sind. Beispielhaft ist der Grundkörper 3 hierbei wiederum rechteckig und weist an zwei seiner Ecken, insbesondere im Nahbereich der Ränder 17, auf seiner ersten Außenseite 4 jeweils eine Erhebung 6 auf. Die Erhebung 6 hat hierbei wiederum eine kegelstumpfförmige Grundform. Auf der zweiten Außenseite 5 an den beiden anderen Ecken sind jeweils weitere Erhebungen 19 mit Kontaktflächen 20 ausgebildet. Bei diesem Beispiel ist auf der der Erhebung 6, 19 abgewandten Seite jeweils eine entsprechende Einbuchtung ausgebildet. Es wäre aber auch eine nicht gezeigte Variante in Anlehnung an die Fig. 7 denkbar.

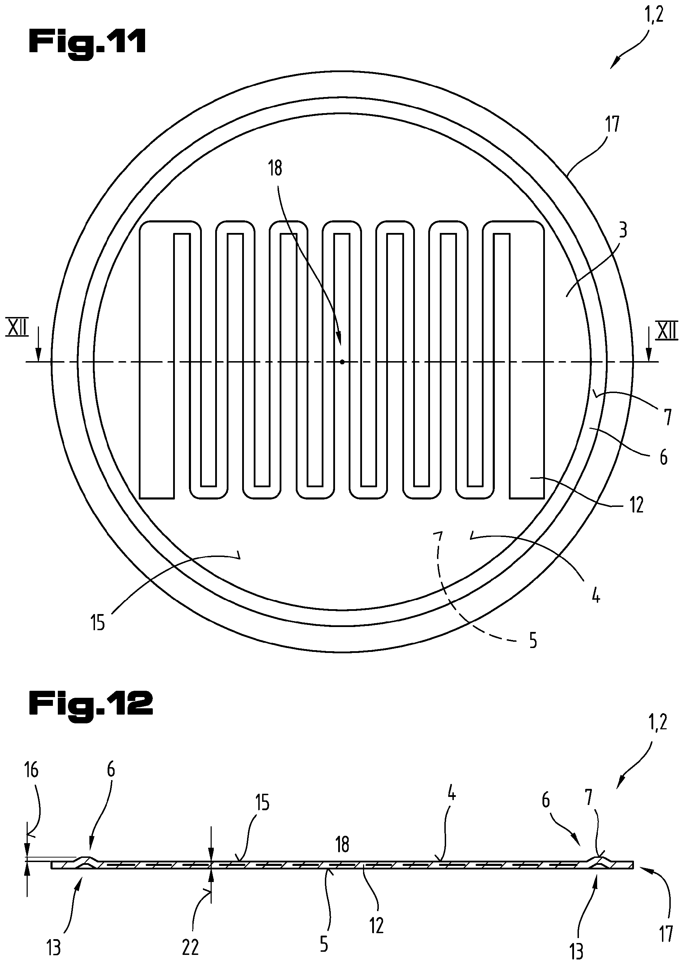

Die Fig. 11 und 12 zeigen ein weiteres Ausführungsbeispiel eines Folienelements 1, wobei dieses einen Grundkörper 3 mit einer runden Grundform aufweist. Auf der ersten Außenseite 4 ist eine einzige Erhebung 6 ausgebildet, welche im Nahbereich des Randes 17 angeordnet und ringförmig ist.

Bei Folienelementen 1 mit mehrschichtigen Grundkörpern 3 kann es sein, dass die erste Au-βenschicht 10 und die zweite Außenschicht 11 jeweils Kunststofffolien sind, wobei die erste Außenschicht 10 und die zweite Außenschicht 11 bevorzugt aus demselben Material gebildet sind.

Es kann auch sein, dass die Kontaktfläche 7 der Erhebung 6 kleiner ist, als eine Gesamtfläche 15 der ersten Außenseite 4, insbesondere dass die Kontaktfläche 7 der Erhebung 6 von 0,1% bis 49%, bevorzugt von 0,2% bis 25%, besonders bevorzugt von 0,5% bis 10% der Gesamtfläche 15 der ersten Außenseite 4 beträgt.

Ein erfindungsgemäßes Kunststoffprodukt 24 ist hergestellt durch Spritzgießen, und umfasst einen Grundkörper 25, mit einem darauf aufgebrachtem aufgebrachtes Folienelement 1.

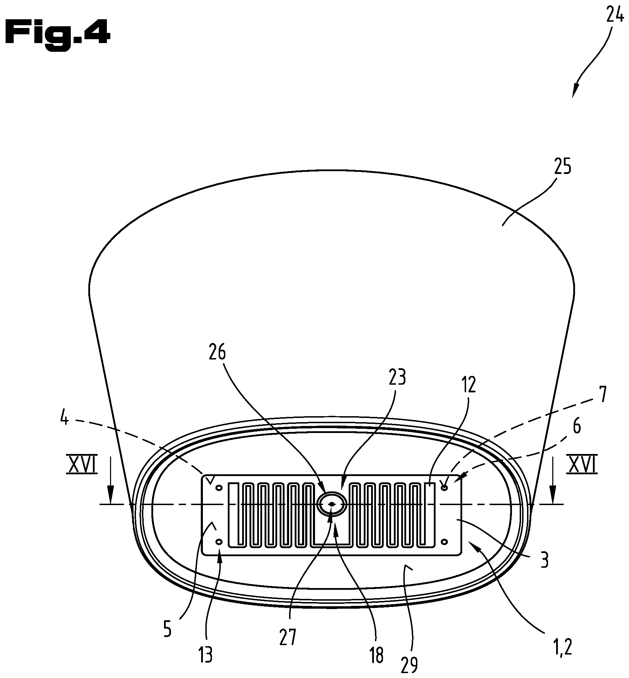

Die Fig. 4 zeigt ein Ausführungsbeispiel eines Kunststoffproduktes 24 in der Ausbildung eines Mehrweg-Verpackungsbehälters bzw. Bechers. Dies wiederum stellvertretend für eine Vielzahl an Kunststoffprodukten. Auf der Unterseite des Kunststoffproduktes, auf der Oberfläche 29 dessen Grundkörpers 25 ist das Folienelement 1 aus den Fig. 1, 2 und 3 aufgebracht. Das Folienelement 1 ist hierbei so angeordnet, dass seine erste Außenseite 4 mit der Oberfläche 29 des Grundkörpers 25 des Kunststoffproduktes 24 kontaktiert. Somit zeigt hier die zweite Außenseite 5 des Folienelements 1 nach außen und ist somit für einen Betrachter sichtbar. Das bedeutet für das Ausführungsbeispiel, dass die Erhebungen 6 ebenfalls die Oberfläche 29 des Grundkörpers 25 des Kunststoffproduktes 24 kontaktieren und folglich die zu den Erhebungen 6 komplementären Einbuchtungen 13 sichtbar sind. Aufgrund des Druckes beim Spritzgießen kann es sein, dass die Einbuchtungen 13 oder Erhebungen 6 prozessbedingt ausgeglichen oder deren Tiefe bzw. Höhe zumindest reduziert wird, sodass diese am fertigen Produkt quasi noch sichtbar bzw. erkennbar sind, aber nicht mehr oder kaum noch spürbar sind, wenn ein Benutzer beispielsweise mit einem Finger darüberstreicht.

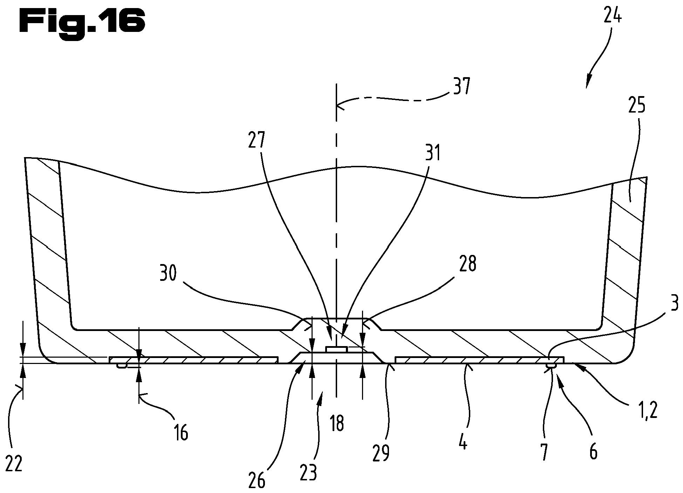

Die Fig. 16 zeigt das Kunststoffprodukt 24 aus Fig. 4 im Schnitt und im Detail. Gezeigt ist eine Variante, wonach das Kunststoffprodukt 24 in seinem Grundkörper 25 eine Positionierungskerbe 26 aufweist, wobei innerhalb der Positionierungskerbe 26 ein Einspritzpunkt 27 angeordnet ist, wobei eine Tiefe 28 des Einspritzpunktes 27 in Bezug auf die Oberfläche 29 des Grundkörpers 25 größer oder gleich groß ist, wie eine Tiefe 30 der Positionierungskerbe 26 in Bezug auf die Oberfläche 29 des Grundkörpers 25. Aus der Fig. 16 geht hervor, dass der Bezug auf die Oberfläche 29 des Grundkörpers 25 zur Erläuterung hier so gemeint ist dass es sich nicht um irgendeine Oberfläche 29 des Grundkörpers 25 handelt, sondern der Bereich der Oberfläche 29 des Grundkörpers 25, in welchem das Folienelement 1 angeordnet ist.

Dabei ist das Folienelement 1, wie insbesondere in der Fig. 4 gezeigt ist, derart auf den Grundkörper 25 aufgebracht, dass der Durchbruch 23 im Grundkörper 3 des Folienelements 1 über der Positionierungskerbe 26 im Grundkörper 25 des Kunststoffproduktes 24 positioniert ist, wobei der Durchbruch 23 des Folienelements 1 größer ist, als die Positionierungskerbe 26 im Grundkörper 25 des Kunststoffproduktes 24 und wobei die Positionierungskerbe 26 im Grundkörper 25 des Kunststoffproduktes 24 größer ist, als der Einspritzpunkt 27. Mit dem Begriff "über" ist hier klarerweise eine Ausrichtung aus der Sichtweise eines Betrachters bei Betrachtung des Kunststoffproduktes 24 mit Blick auf das Folienelement 1 gemeint.

Weiters können gemäß Fig. 4 der Durchbruch 23 des Folienelements 1, die Positionierungskerbe 26 im Grundkörper 25 des Kunststoffproduktes 24 und der Einspritzpunkt 27 konzentrisch in Bezug auf einen Mittelpunkt 31 des Einspritzpunktes 27 sein.

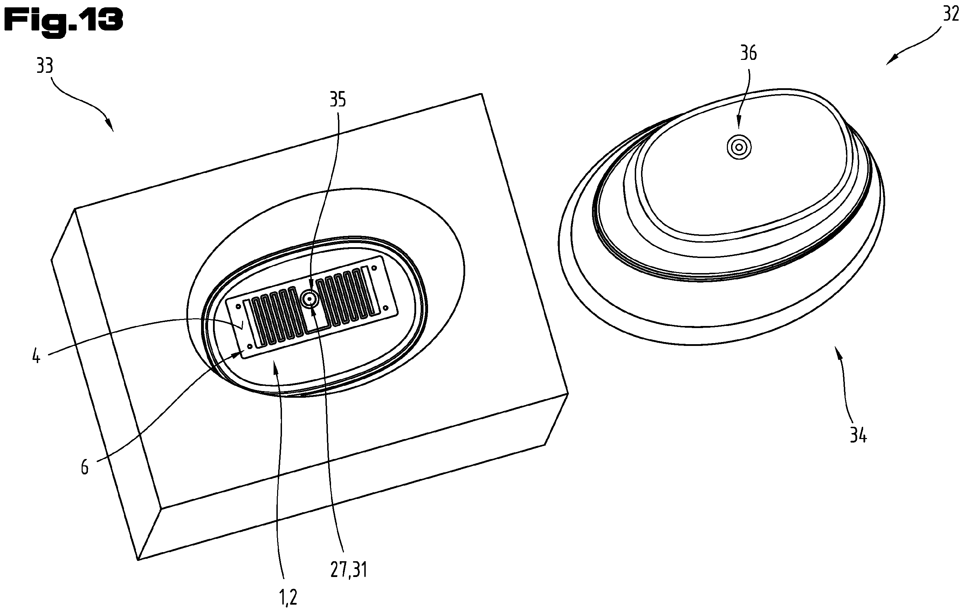

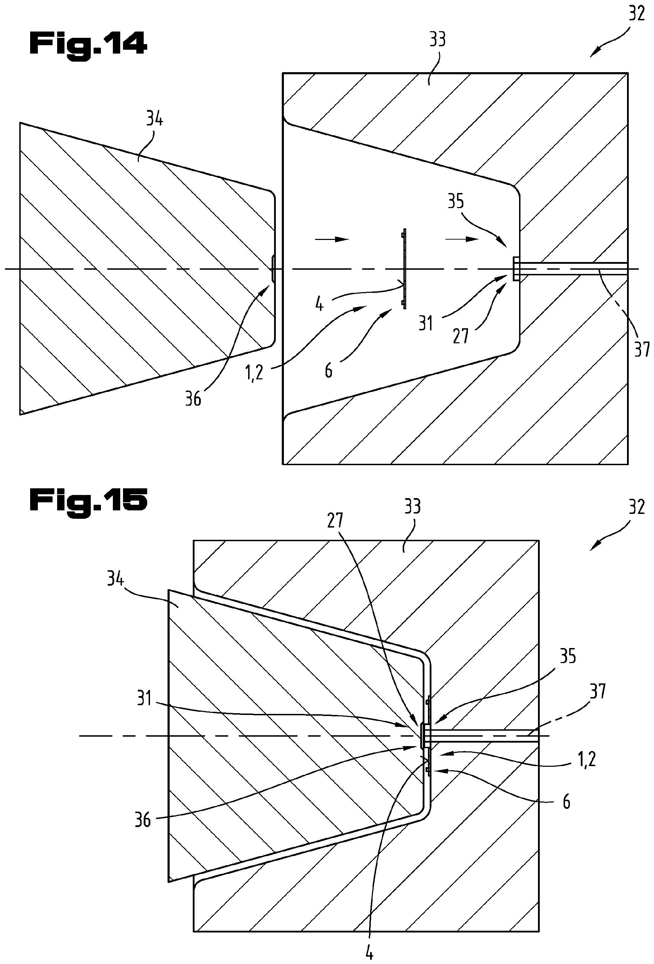

Die Fig. 13 bis 15 zeigen ein Ausführungsbeispiel eines Spritzgießwerkzeuges 32 zur Herstellung eines Kunststoffproduktes 24, beispielsweise eines Kunststoffproduktes 24 wie in den Fig. 4 und 16 gezeigt. Dieses Spritzgießwerkzeug 32 umfasst einen ersten Werkzeugteil 33 und einen zweiten Werkzeugteil 34, wobei der erste Werkzeugteil 33 und der zweite Werkzeugteil 34 zur Bildung einer Negativform eines Kunststoffproduktes 24 entlang einer Zentrierungsachse 37 zusammenführbar sind. Die Fig. 13 zeigt die beiden Werkzeugteile 33, 34 separat, links in der Darstellung der erste Werkzeugteil 33 und rechts in der Darstellung der zweite Werkzeugteil 34. In dem ersten Werkzeugteil 33 ist dabei bereits ein Folienelement 1 eingesetzt. Die Fig. 14 und 15 zeigen die beiden Werkzeugteile 33, 34 in Schnittansicht, grobschematisch und so angeordnet, wie beispielsweise in einer - nicht näher dargestellten - Spritzgießanlage.

Die nachfolgend in Zusammenhang mit einem Herstellungsverfahren beschriebenen Anlagenteile werden nachfolgend nur dort näher beschrieben, wo die Technologie vom Stand der Technik abweicht.

Ein solches Verfahren sieht folgende Verfahrensschritte vor:
- Bereitstellen einer Spritzgießanlage, die Spritzgießanlage umfassend eine Plastifiziereinheit zum Plastifizieren von Kunststoff und eine Schließeinheit mit einem Spritzgießwerkzeug 32,
- Bereitstellen eines Folienelement-Stapels 9, insbesondere eines Folienelement-Stapels 9 gemäß obenstehender beschreiben, wobei die Folienelemente 1 des Folienelement-Stapels 9 bevorzugt ebenso nach obenstehender Beschreibung ausgebildet sind und/oder bevorzugt in einem Verfahren nach obenstehender Beschreibung hergestellt sind,
- Aufgreifen eines Folienelements 1 von dem Folienelement-Stapel 9 durch Abheben des obersten Folienelements 1 oder des untersten Folienelements 1 mittels einer Handhabungsvorrichtung,
- Einsetzen des Folienelements 1 in das Spritzgießwerkzeug 32,
- Einbringen von plastifiziertem Kunststoff von der Plastifiziereinheit in das Spritzgießwerkzeug 32 und dadurch Hinterspritzen des Folienelements 1 und Formen eines Kunststoffproduktes 24.

Der erste Werkzeugteil 33 weist einen Zentrierungsfortsatz 35 auf. Dieser ist in der Fig. 13, und insbesondere in den vereinfachten Schnittansichten in den Fig. 14 und 15 gut erkennbar. Grobschematisch ist mittels der Fig. 14 und 15 ein Teil eines Verfahrens zur Herstellung eines Kunststoffproduktes 24 skizziert.

Der Zentrierungsfortsatz 35 ist dabei dazu ausgebildet, ein auf den Zentrierungsfortsatz 35 aufgesetztes Folienelement 1 mit einem Durchbruch 23 in seinem Grundkörper 3, zu zentrieren und zu fixieren. Im zusammengeführten Zustand des ersten Werkzeugteils 33 und des zweiten Werkzeugteils 34, wie beispielsweise in der Fig. 15 skizziert, wirken der zweite Werkzeugteil 34 und der Zentrierungsfortsatz 35 derart zusammen, dass ein Folienelement 1 dazwischen fixierbar ist, sodass das Folienelement 1 beim Einspritzen von plastifiziertem Kunststoff in das Spritzgießwerkzeug 32 in Bezug auf die Zentrierungsachse 37 in axialer Richtung zum ersten Werkzeugteil 33 gedrückt ist und in radialer Richtung fixiert ist.

Es kann sein, dass der zweite Werkzeugteil 34 ein Gegenelement 36 aufweist, wobei im zusammengeführten Zustand des ersten Werkzeugteils 33 und des zweiten Werkzeugteils 34 das Gegenelement 36 und der Zentrierungsfortsatz 35 entlang einer gemeinsamen Zentrierungsachse 37 angeordnet sind.

Insbesondere wenn das Spritzgießwerkzeug 32 mit einem Zentrierungsfortsatz 35 und gegebenenfalls auch mit einem Gegenelement 36 ausgebildet ist, und wenn im Grundkörper 3 des Folienelements 1 ein Durchbruch 23 ausgebildet ist, kann bei dem Herstellverfahren vorgesehen sein, dass das Folienelement 1 mit dem Durchbruch 23 auf den Zentrierungsfortsatz 35 des ersten Werkzeugteils 33 eingesetzt wird, und dass der erste Werkzeugteil 33 und der zweite Werkzeugteil 34 geschlossen werden, sodass das Folienelement 1 zwischen dem Zentrierungsfortsatz 35 und dem Gegenelement 36 des zweiten Werkzeugteils 34 fixiert wird. Beim Einbringen von plastifiziertem Kunststoff in das Spritzgießwerkzeug 32 kann das Folienelement 1 in Bezug auf die Zentrierungsachse 37 in axialer Richtung zum ersten Werkzeugteil 33 gedrückt werden und in radialer Richtung fixiert werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Folienelement | 29 | Oberfläche des Grundkörpers des Kunststoffproduktes |
| 2 | in-mold-Etikett | | |
| 3 | Grundkörper des Folienelements | 30 | Tiefe der Positionierungskerbe |
| 4 | erste Außenseite | 31 | Mittelpunkt des Einspritzpunktes |
| 5 | zweite Außenseite | 32 | Spritzgießwerkzeug |
| 6 | Erhebung | 33 | erster Werkzeugteil |
| 7 | Kontaktfläche der Erhebung | 34 | zweiter Werkzeugteil |
| 8 | weiteres Folienelement | 35 | Zentrierungsfortsatz |
| 9 | Folienelement-Stapel | 36 | Gegenelement |
| 10 | erste Außenschicht | 37 | Zentrierungsachse |
| 11 | zweite Außenschicht | 38 | Trägerschicht |
| 12 | maschinenlesbares Element | 39 | Haftvermittlerschicht |
| 13 | Einbuchtung | | |
| 14 | Zusatzschicht | | |
| 15 | Gesamtfläche | | |
| 16 | Höhe der Erhebung | | |
| 17 | Rand | | |
| 18 | Mitte | | |
| 19 | weitere Erhebung | | |
| 20 | Kontaktfläche der weiteren Erhebung | | |
| 21 | Höhe der weiteren Erhebung | | |
| 22 | Dicke des Folienelements | | |
| 23 | Durchbruch | | |
| 24 | Kunststoffprodukt | | |
| 25 | Grundkörper des Kunststoffproduktes | | |
| 26 | Positionierungskerbe | | |
| 27 | Einspritzpunk | | |
| 28 | Tiefe des Einspritzpunktes | | |

## Patentansprüche

1. Folienelement (1), insbesondere in-mold-Etikett (2), umfassend einen Grundkörper (3) mit einer ersten Außenseite (4) und einer zweiten Außenseite (5), **dadurch gekennzeichnet, dass** auf der ersten Außenseite (4) eine Erhebung (6) ausgebildet ist, wobei die Erhebung (6) eine Kontaktfläche (7) aufweist, wobei die Kontaktfläche (7) zur Lagerung für ein weiteres Folienelement (8) zur Bildung eines Folienelement-Stapels (9) ausgebildet ist.

2. Folienelement (1) nach Anspruch 1, **dadurch gekennzeichnet, dass** der Grundkörper (3) mehrschichtig ist, und dass die erste Außenseite (4) auf einer ersten Außenschicht (10) ausgebildet ist und dass die zweite Außenseite (5) auf einer zweiten Außenschicht (11) ausgebildet ist.

3. Folienelement (1) nach Anspruch 2, **dadurch gekennzeichnet, dass** zwischen der ersten Außenschicht (10) und der zweiten Außenschicht (11) ein maschinenlesbares Element (12), insbesondere ein RFID-Chip und/oder eine Antenne, angeordnet ist.

4. Folienelement (1) nach Anspruch einem der vorhergehenden Ansprüche, **dadurch gekennzeichnet, dass** die Erhebung (6) eine Prägestruktur ist, wobei der Grundkörper (3) geprägt ist, sodass auf der zweiten Außenseite (5) eine der Erhebung (6) gegenüberliegende und zu dieser formkomplementäre Einbuchtung (13) ausgebildet ist.

5. Folienelement (1) nach einem der Ansprüche 1 bis 3, **dadurch gekennzeichnet, dass** die Erhebung (6) eine Prägestruktur ist, wobei die erste Außenschicht (10) geprägt ist, oder dass die Erhebung (6) eine Zusatzschicht (14) ist, wobei die Zusatzschicht (14) auf die erste Außenseite (4) aufgebracht ist, oder wobei die Zusatzschicht (14) zwischen der ersten Außenschicht (10) und der zweiten Außenschicht (11) angeordnet ist.

6. Folienelement (1) nach einem der Ansprüche 2 bis 5, **dadurch gekennzeichnet, dass** die erste Außenschicht (10) und die zweite Außenschicht (11) jeweils Kunststofffolien sind, wobei die erste Außenschicht (10) und die zweite Außenschicht (11) bevorzugt aus demselben Material gebildet sind.

7. Folienelement (1) nach einem der vorhergehenden Ansprüche, **dadurch gekennzeichnet, dass** die Kontaktfläche (7) der Erhebung (6) kleiner ist, als eine Gesamtfläche (15) der ersten Außenseite (4), insbesondere dass die Kontaktfläche (7) der Erhebung (6) von 0,1% bis 49%, bevorzugt von 0,2% bis 25%, besonders bevorzugt von 0,5% bis 10% der Gesamtfläche (15) der ersten Außenseite (4) beträgt.

8. Folienelement (1) nach einem der vorhergehenden Ansprüche, **dadurch gekennzeichnet, dass** auf der ersten Außenseite (4) mehrere Erhebungen (6) ausgebildet sind, wobei die Erhebungen (6) jeweils dieselbe Höhe (16) aufweisen.

9. Folienelement (1) nach einem der vorhergehenden Ansprüche, **dadurch gekennzeichnet, dass** die Erhebungen (6) jeweils im Nahbereich von Rändern (17) des Grundkörpers (3) angeordnet sind, insbesondere dass die Erhebungen (6) näher an den Rändern (17) des Grundkörpers (3) angeordnet sind, als an einer Mitte (18) des Grundkörpers (3).

10. Folienelement (1) nach einem der vorhergehenden Ansprüche, **dadurch gekennzeichnet, dass** auf der zweiten Außenseite (5) eine weitere Erhebung (19) ausgebildet ist, wobei die weitere Erhebung (19) eine Kontaktfläche (20) aufweist, wobei die Kontaktfläche (20) zur Lagerung für ein weiteres Folienelement (8) zur Bildung eines Folienelement-Stapels (9) ausgebildet ist.

11. Folienelement (1) nach einem der vorhergehenden Ansprüche, **dadurch gekennzeichnet, dass** die Höhe (16) der Erhebung (6) geringer ist als eine Dicke (22) des Grundkörpers (3), insbesondere dass die Höhe der Erhebung (6) zwischen 10% und 250%, bevorzugt zwischen 20% und 150%, besonders bevorzugt zwischen 30% und 90%, insbesondere zwischen 40% und 70% der Dicke (22) des Grundkörpers (3) beträgt.

12. Folienelement (1) nach einem der vorhergehenden Ansprüche, **dadurch gekennzeichnet, dass** der Grundkörper (3) einen Durchbruch (23) aufweist, wobei der Durchbruch (23) bevorzugt in einer Mitte (18) des Grundkörper (3) angeordnet ist.

13. Folienelement-Stapel (9) umfassend zwei oder mehr Folienelemente (1, 8), wobei zumindest eines der Folienelemente (1) nach einem der Ansprüche 1 bis 12 ausgebildet ist, und wobei die Kontaktfläche (7) der Erhebung (6) auf der ersten Außenseite (4) des Folienelements (1) zur Lagerung für ein weiteres Folienelement (8) ausgebildet ist.

14. Kunststoffprodukt (24) hergestellt durch Spritzgießen, mit einem Grundkörper (25), umfassend ein auf den Grundkörper (25) aufgebrachtes Folienelement (1) nach einem der Ansprüche 1 bis 12.

15. Kunststoffprodukt (24) nach Anspruch 14, **dadurch gekennzeichnet, dass** das Folienelement (1) nach Anspruch 12 ausgebildet ist, und dass in dem Grundkörper (25) des Kunststoffproduktes (24) eine Positionierungskerbe (26) ausgebildet ist, wobei innerhalb der Positionierungskerbe (26) ein Einspritzpunkt (27) angeordnet ist, wobei eine Tiefe (28) des Einspritzpunktes (27) in Bezug auf die Oberfläche (29) des Grundkörpers (25) größer oder gleich groß ist, wie eine Tiefe (30) der Positionierungskerbe (26) in Bezug auf die Oberfläche (29) des Grundkörpers (25) und wobei das Folienelement (1) derart auf den Grundkörper (25) aufgebracht ist, dass der Durchbruch (23) im Grundkörper (3) des Folienelements (1) über der Positionierungskerbe (26) im Grundkörper (25) des Kunststoffproduktes (24) positioniert ist, wobei der Durchbruch (23) des Folienelements (1) größer ist, als die Positionierungskerbe (26) im Grundkörper (25) des Kunststoffproduktes (24) und wobei die Positionierungskerbe (26) im Grundkörper (25) des Kunststoffproduktes (24) größer ist, als der Einspritzpunkt (27).

16. Kunststoffprodukt (24) nach Anspruch 15, **dadurch gekennzeichnet, dass** der Durchbruch (23) des Folienelements (1), die Positionierungskerbe (26) im Grundkörper (25) des Kunststoffproduktes (24) und der Einspritzpunkt (27) konzentrisch in Bezug auf einen Mittelpunkt (31) des Einspritzpunktes (27) sind.

17. Spritzgießwerkzeug (32) zur Herstellung eines Kunststoffproduktes (24), mit einem ersten Werkzeugteil (33) und einem zweiten Werkzeugteil (34), wobei der erste Werkzeugteil (33) und der zweite Werkzeugteil (34) zur Bildung einer Negativform eines Kunststoffproduktes (24) entlang einer Zentrierungsachse (37) zusammenführbar sind, **dadurch gekennzeichnet, dass**
der erste Werkzeugteil (33) einen Zentrierungsfortsatz (35) aufweist, wobei der Zentrierungsfortsatz (35) dazu ausgebildet ist, ein auf den Zentrierungsfortsatz (35) aufgesetztes Folienelement (1) mit einem Durchbruch (23) in seinem Grundkörper (3), insbesondere ein Folienelement (1) nach Anspruch 12, zu zentrieren und zu fixieren,
und wobei im zusammengeführten Zustand des ersten Werkzeugteils (33) und des zweiten Werkzeugteils (34) der zweite Werkzeugteil (34) und der Zentrierungsfortsatz (35) derart zusammenwirken, dass ein Folienelement (1) dazwischen fixierbar ist, sodass das Folienelement (1) beim Einspritzen von plastifiziertem Kunststoff in das Spritzgießwerkzeug (32) in Bezug auf die Zentrierungsachse (37) in axialer Richtung zum ersten Werkzeugteil (33) gedrückt ist und in radialer Richtung fixiert ist.

18. Spritzgießwerkzeug (32) nach Anspruch 17, **dadurch gekennzeichnet, dass** der zweite Werkzeugteil (34) ein Gegenelement (36) aufweist,
und wobei im zusammengeführten Zustand des ersten Werkzeugteils (33) und des zweiten Werkzeugteils (34) das Gegenelement (36) und der Zentrierungsfortsatz (35) entlang einer gemeinsamen Zentrierungsachse (37) angeordnet sind und derart zusammenwirken, dass ein Folienelement (1) dazwischen fixierbar ist, sodass das Folienelement (1) beim Einspritzen von plastifiziertem Kunststoff in das Spritzgießwerkzeug (32) in Bezug auf die Zentrierungsachse (37) in axialer Richtung zum ersten Werkzeugteil (33) gedrückt ist und in radialer Richtung fixiert ist.

19. Verfahren zur Herstellung eines Folienelements (1), insbesondere eines Folienelements (1) nach einem der Ansprüche 1 bis 12, umfassend die Verfahrensschritte:
- Bereitstellen einer Folie,
- Prägen der Folie mittels eines Prägewerkzeuges,
- Konfektionieren der Folie in mehrere einzelne Folienelemente (1).

20. Verfahren nach Anspruch 19, **dadurch gekennzeichnet, dass** die Folie oder das Folienelement (1) mittels eines Stanzwerkzeuges gestanzt wird, oder mittels eines Lasers hergestellt wird, sodass der Grundkörper (3) jedes Folienelements (1) einen Durchbruch (23) aufweist.

21. Verfahren zur Herstellung eines Kunststoffproduktes (24), bevorzugt eines Kunststoffproduktes (24) nach einem der Ansprüche 14 bis 16, umfassend die Verfahrensschritte:
- Bereitstellen einer Spritzgießanlage, die Spritzgießanlage umfassend eine Plastifiziereinheit zum Plastifizieren von Kunststoff und eine Schließeinheit mit einem Spritzgießwerkzeug (32),
- Bereitstellen eines Folienelement-Stapels (9), insbesondere eines Folienelement-Stapels (9) nach Anspruch 13, wobei die Folienelemente (1) des Folienelement-Stapels (9) bevorzugt nach einem der Ansprüche 1 bis 12 ausgebildet sind und/oder bevorzugt in einem Verfahren nach einem der Ansprüche 18 bis 20 hergestellt sind,
- Aufgreifen eines Folienelements (1) von dem Folienelement-Stapel (9) durch Abheben des obersten Folienelements (1) oder des untersten Folienelements (1) mittels einer Handhabungsvorrichtung,
- Einsetzen des Folienelements (1) in das Spritzgießwerkzeug (32),
- Einbringen von plastifiziertem Kunststoff von der Plastifiziereinheit in das Spritzgießwerkzeug (32) und dadurch Hinterspritzen des Folienelements (1) und Formen eines Kunststoffproduktes (24).

22. Verfahren nach Anspruch 21, **dadurch gekennzeichnet, dass** das Spritzgießwerkzeug (32) nach Anspruch 17 ausgebildet ist, und dass im Grundkörper (3) des Folienelements (1) ein Durchbruch (23) ausgebildet ist, wobei das Folienelement (1) mit dem Durchbruch (23) auf den Zentrierungsfortsatz (35) des ersten Werkzeugteils (33) eingesetzt wird, und wobei der erste Werkzeugteil (33) und der zweite Werkzeugteil (34) geschlossen werden, sodass das Folienelement (1) zwischen dem Zentrierungsfortsatz (35) und dem Gegenelement (36) des zweiten Werkzeugteils (34) fixiert wird, wobei das Folienelement (1) beim Einbringen von plastifiziertem Kunststoff in das Spritzgießwerkzeug (32) in Bezug auf die Zentrierungsachse (37) in axialer Richtung zum ersten Werkzeugteil (33) gedrückt wird und in radialer Richtung fixiert wird.
